(19) Europäisches Patentamt
European Patent Office
Office européen des brevets

(11) **EP 2 765 275 A1**

(12) **EUROPEAN PATENT APPLICATION**
published in accordance with Art. 153(4) EPC

(43) Date of publication:
**13.08.2014 Bulletin 2014/33**

(51) Int Cl.:
*F01D 5/14* (2006.01)    *F01D 9/02* (2006.01)
*G06F 17/50* (2006.01)

(21) Application number: **12825528.8**

(22) Date of filing: **23.05.2012**

(86) International application number:
**PCT/JP2012/063111**

(87) International publication number:
**WO 2013/027449 (28.02.2013 Gazette 2013/09)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.08.2011   JP 2011180246**

(71) Applicant: **Hitachi, Ltd.**
**Tokyo 100-8280 (JP)**

(72) Inventors:
• **TANAKA, Tomomi**
**Tokyo 100-8280 (JP)**

• **SHIKANO, Yoshio**
**Tokyo 100-8280 (JP)**
• **YAMASHITA, Yutaka**
**Tokyo 100-8280 (JP)**

(74) Representative: **MERH-IP**
**Matias Erny Reichl Hoffmann**
**Paul-Heyse-Strasse 29**
**80336 München (DE)**

(54) **METHOD FOR CALCULATING UNSTEADY FORCE ACTING ON ROTOR BLADE OR STATOR BLADE, TURBINE DESIGN TECHNIQUE AND TURBINE MANUFACTURING METHOD**

(57)    A turbine design method that can easily construct a turbine stage structure in which an unsteady force acting on a rotor blade can be reduced and degradation in performance and increase in rotor shaft length can be prevented is provided. For example, unsteady forces and exciting forces by the potential field interaction acting on the rotor blade are respectively obtained by the viscous flow solution (21) and the inviscid flow solution (22) with respect to a plurality of distances between stator and rotor blades, exciting forces by the wake interaction acting on the rotor blade are obtained from a difference between a viscous flow solution result and an inviscid flow solution result, the exciting forces by the potential field interaction and the wake interaction are mathematically expressed (23) as functions of the distance between stator and rotor blades, the unsteady force acting on the rotor blade when the distance between stator and rotor blades is an arbitrary value is calculated (24) based on the mathematically-expressed exciting forces by the potential field interaction and the wake interaction, and the distance between stator and rotor blades is determined (30) based on a calculation result.

[FIG. 1]

**EP 2 765 275 A1**

**Description**

Technical Field

This invention relates to a method of calculating an unsteady force acting on a rotor blade or a stator blade, a method of designing a turbine and a method of manufacturing a turbine, and specifically to a method of designing a turbine stage including a stator blade and a rotor blade in a turbomachine such as a steam turbine or a gas turbine.

Background Art

An axial-flow turbine includes a rotor and pluralities of rotor blades and stator blades within a casing. The stator blade converts thermal energy of a fluid such as gas and steam into kinetic energy to rotate the rotor blade. The stator blade incorporated in a stator and the rotor blade implanted in a rotor groove form a turbine stage.

The stator blade in the turbine stage generates periodic time variations of a pressure field and a velocity field (nozzle wake) with respect to the rotor blade located at the downstream. This generates an unsteady force and the unsteady force acts on the rotor blade. In this regard, the rotor blade is excited by this which has a vibration frequency obtained by multiplication of the number of stator blades by the number of rotations. Generally, the interaction that excites variations of the pressure field is called the potential field interaction, and the interaction that excites variations of the velocity field is called the wake interaction. At the high-pressure stage and the intermediate-pressure stage of the steam turbine, the principal components of the unsteady force acting on the rotor blade include the potential field interaction and the wake interaction. The unsteady force generated by these two interferences is called NPF (Nozzle Passing Frequency) exciting force. It is important to design the rotor blade not to be broken by the NPF exciting force.

It is known that the NPF exciting force acting on the rotor blade changes depending on the axial distance between the stator blade and the rotor blade and the size of the rotor blade. It is known that the exciting forces due to the respective interferences of the potential field interaction and the wake interaction tend to increase as the axial distance between the stator blade trailing edge part and the rotor blade leading edge part, i.e., the distance between stator and rotor blades is shorter. However, it is also known that the NPF exciting force as a sum of the potential field interaction and the wake interaction do not monotonously change with respect to the distance between stator and rotor blades depending on the combination of phase of the potential field interaction and the wake interaction. The phenomenon is complex and the NPF exciting force is often obtained directly by unsteady calculation of CFD (Computational Fluid Dynamics).

Citation List

Patent Literature

PTL 1: Japanese Patent No. 3,886,584

Non Patent Literature

NPL 1: M. V. Hoyningen-Huene, J. Hermeler, Time-Resolved Numerical Analysis of the 2-D Aerodynamics in the First Stage of an Industrial Gas Turbine for Different Vane-Blade Spacings, ASME, 99-GT-102, pp. 1-12 (1999)
NPL 2: T. Korakianitis, On the Prediction of Unsteady Forces on Gas Turbine Blades: Part 1&2 Description of the Approach: Transactions of the ASME, Vol. 114, pp. 114-131 (1992)

Summary of Invention

Technical Problems

The NPF exciting force is often obtained directly by unsteady calculation of CFD, however, the calculation takes time. Further, to obtain a quantitative relationship between the distance between stator and rotor blades and the NPF exciting force, there is no method but to perform lots of calculation of CFD and plotting by connecting the points. However, this method takes time for the calculation and the regularity is unknown. Accordingly, when the number of calculations is reduced, the tendency of the change of the NPF exciting force with respect to the distance between stator and rotor blades is known at best and the quantitative prediction of the NPF exciting force at an arbitrary distance between stator and rotor blades is difficult. Therefore, flexible changes of the distance between stator and rotor blades and the size of the stator blade with the unsteady force equal to a predetermined threshold value or less are difficult in design.

Further, in an arbitrary single rotor blade, the magnitude of the respective exciting forces of the potential field interaction and the wake interaction differ depending on the blade height location. Accordingly, the magnitude and the tendency of the NPF exciting force with respect to the distance between stator and rotor blades are different among the blade tip section, the blade mid-section, and the blade root section. Therefore, to effectively reduce the NPF exciting force, it is necessary to consider the difference in tendency of the NPF exciting force depending on the blade height location, and the calculation time further increases.

On the other hand, when the distance between stator and rotor blades is shortened, the friction loss of the side wall is suppressed, and thus, performance upgrade is expectable. Further, in the multi-stage turbine like the steam turbine, the distance between stator and rotor blades in each stage affects the length of the rotor, and the shortening of the distance between stator and rotor blades contributes to the shortening of the rotor length and the effect of improving the rotor rigidity is expectable.

Regarding methods of determining the distance between stator and rotor blades in blade design, for example, a method of selecting a phase and a distance between stator and rotor blades so that the exciting forces of the respective interactions may be as small as possible using the phase of the potential field interaction and the wake interaction (NPL 1). According to the method, the exciting force by the potential field interaction and the exciting force by the wake interaction may be made as small as possible, however, it is difficult to consider the difference in magnitude of the exciting forces of the respective interactions. Accordingly, a distance between stator and rotor blades longer than necessary may be employed and this causes degradation in performance and increase in rotor shaft length. Further, if the method is used when the amplitudes of the exciting forces by the respective interactions are not quantitatively grasped, the NPF exciting force may be underestimated.

The methods of obtaining the exciting force by the potential field interaction and the exciting force by the wake interaction using CFD include a method of two-dimensional unsteady analysis with the rotor blade as a model (NPL 2), for example. According to the method, as a condition at the upstream side of the rotor blade, a periodic pressure fluctuation field is provided in a circumferential direction in the analysis of the potential field interaction only, and a velocity deficit flow that attenuates with the distance between stator and rotor blades is provided in the analysis of the wake interaction only. When the NPF exciting force obtained by combining each interaction is evaluated, the analysis conditions in the respective interactions are simultaneously provided to the upstream of the rotor blades. Problems of the method are that the method is unavailable unless the conditions in the respective interactions are clear and that the calculation in consideration of the stator blade shape is unable.

In design, in order not to break the blades by the NPF exciting force, it is simple to employ stator blades sufficiently detuned from NPF. This method is a method of providing limitations in the number of employable stator blades, and employment of stator blades that degrade the performance and the stator blades longer in the axial direction may be forced. There is a design method of restricting the distance between the stator and rotor blades and the size of the stator blades in advance in order not to excessively increase the NPF exciting force. For example, in PTL 1, the stator blade structure such that the distance between stator and rotor blades may not become a predetermined value or less is defined. However, in PTL 1, the distance between stator and rotor blades and the size of the stator blade are respectively independently evaluated, and thus, the effects of other factors are not quantitatively considered and it is likely that the NPF exciting force is evaluated to be larger. In this regard, there may be no choice but to employ stator blades larger than necessary and employ an axial distance longer than necessary. Further, PTL 1 does not consider the difference in tendency of the NPF exciting force in the blade height direction.

The above description is summarized as follows. In the design method such that the NPF exciting force may be directly calculated using CFD to be the predetermined threshold value or less, the calculation takes time and is impractical, and, in the other design methods, when the NPF exciting force is suppressed to the predetermined threshold value or less, the nozzle and the distance between stator and rotor blades larger than necessary may be employed and they may possibly cause degradation in performance and increase in rotor shaft length.

Further, the above described problems are the same with respect to a design method such that the unsteady force acting on the stator blade of the downstream turbine stage, BPF (Bucket Passing Frequency) exciting force may be suppressed to a predetermined threshold value or less.

An object of the invention is to provide a turbine design method that can easily construct a turbine stage structure in which an unsteady force (NPF exciting force or BPF exciting force) acting on a rotor blade or a stator blade can be reduced and degradation in performance and increase in rotor shaft length can be prevented.

Solution to Problems

In order to solve the problems, the invention provides a method of calculating an unsteady force acting on a rotor blade or a stator blade. That is, the method of calculating the unsteady force acting on the rotor blade or the stator blade of the invention is characterized by obtaining unsteady forces and exciting force by the potential field interaction acting on the rotor blade or the stator blade with respect to a plurality of values by varying a value of a factor by the viscous flow solution and the inviscid flow solution using models of the stator blade and the rotor blade for which blade basic shapes have been determined, obtaining exciting forces by the wake interaction acting on the rotor blade or the stator blade with respect to the plurality of values from a difference between a result of the viscous flow solution and a result of the inviscid flow solution, mathematically expressing the exciting forces by the potential field interaction and the exciting forces by the wake interaction based on the obtained exciting forces by the potential field interaction and exciting forces by the wake interaction with respect to the plurality of values, and predicting the unsteady force acting on the rotor blade or the stator blade when the factor is an arbitrary value based on the mathematically-expressed exciting forces by the potential field interaction and exciting forces by the wake interaction.

The turbine design method of the invention uses the above described method of calculating the unsteady force acting on the rotor blade or the stator blade and, for example, obtains unsteady forces and exciting forces by the potential field interaction acting on the rotor blade with respect to a plurality of distances between stator and rotor blades by the viscous flow solution and the inviscid flow solution using models of the stator blade and the rotor blade for which blade basic shapes have been determined, obtains exciting forces by the wake interaction acting on the rotor blade with respect to the plurality of distances between stator and rotor blades from a difference between a result of the viscous flow solution and a result of the inviscid flow solution, mathematically expressing the exciting forces by the potential field interaction and the exciting forces by the wake interaction as a function of the distance between stator and rotor blades based on the obtained exciting forces by the potential field interaction and the wake interaction, predicts the unsteady force acting on the rotor blade when the distance between stator and rotor blades is an arbitrary value based on the mathematically-expressed exciting forces by the potential field interaction and the wake interaction, and determines the distance between stator and rotor blades so that the unsteady force acting on the rotor blade may be smaller than a predetermined threshold value based on the predicted unsteady force acting on the rotor blade.

Further, the turbine design method of the invention, for example, mathematically expresses the exciting forces by the potential field interaction and the exciting forces by the wake interaction with a ratio of blade numbers or chord lengths of the stator blades and the rotor blades as a factor in place of the distance between stator and rotor blades, and determines the ratio of blade numbers or chord lengths of the stator blades and the rotor blades.

Furthermore, the turbine design method of the invention, for example, determines a distance between rotor and stator blades or a ratio of blade numbers or chord lengths of the rotor blades and the stator blades as a relationship between the rotor blade at an upstream turbine stage and the stator blade at a downstream turbine stage in place of the stator blade and the rotor blade of the same turbine stage.

Advantageous Effects of the Invention

According to the invention, in the turbine design, the turbine stage structure in which an unsteady force (NPF exciting force or BPF exciting force) acting on a rotor blade or a stator blade can be reduced and degradation in performance and increase in rotor shaft length can be prevented may be easily constructed.

For example, with respect to the distance between stator and rotor blades as the axial distance between the stator blade and the rotor blade in the turbine stage, the distance between stator and rotor blades with which the NPF exciting force acting on the rotor blade is equal to or less than a predetermined threshold value may be easily determined without unnecessary degradation in blade performance and increase in rotor shaft length.

The other problems, configurations and advantages than those described above will be made clear by the following explanation of embodiments.

Brief Description of Drawings

[Fig. 1] Fig. 1 is a diagram for explanation of a design method of a turbine stage as one working example of the invention.

[Fig. 2] Fig. 2 is a sectional view showing a schematic configuration of the turbine stage to which the invention is applied.

[Fig. 3(a)] Fig. 3 (a) is a graph of mathematical expressions of amplitudes of exciting forces in the potential field and the wake interactions in a section at a certain blade height.

[Fig. 3(b)] Fig. 3(b) is a graph of mathematical expressions of phase of exciting forces in the potential field and the wake interactions in a section at a certain blade height.

[Fig. 4(a)] Fig. 4(a) is a graph showing examples of relationships between the exciting force (tangential force) by the potential field interaction and the distance between stator and rotor blades.

[Fig. 4(b)] Fig. 4(b) is a graph showing examples of relationships between exciting force (axial force) by the potential field interaction and the distance between stator and rotor blades.

[Fig. 5(a)] Fig. 5(a) is a graph showing examples of relationships between the exciting force (tangential force) by the wake interaction and the distance between stator and rotor blades.

[Fig. 5(b)] Fig. 5(b) is a graph showing examples of relationships between the exciting force (axial force) by the wake interaction and the distance between stator and rotor blades.

[Fig. 6(a)] Fig. 6(a) is a graph showing examples of relationships between the NPF exciting force and the distance between stator and rotor blades in a blade tip section.

[Fig. 6(b)] Fig. 6(b) is a graph showing examples of relationships between the NPF exciting force and the distance between stator and rotor blades in a blade mid-section.

[Fig. 6(c)] Fig. 6(c) is a graph showing examples of relationships between the NPF exciting force and the distance between stator and rotor blades in a blade root section.

[Fig. 7] Fig. 7 is a sectional view of an example of a turbine stator blade to which the invention is applied.

[Fig. 8] Fig. 8 is a sectional view of an example of the turbine stator blade used for CFD unsteady calculation.

[Fig. 9] Fig. 9 is a sectional view of another example of the turbine stator blade used for CFD unsteady calculation.

[Fig. 10] Fig. 10 is a graph showing an example of a relationship between the NPF exciting force and ratio of blade numbers of rotor and stator blades.

Description of Embodiments

As below, working examples of the invention will be described using the drawings. The invention may be applied to a turbine stage (a pair of a turbine stator blade and a turbine rotor blade) in a steam turbine, a gas turbine, or the like, and working examples of application to the turbine stage of the steam turbine will be described in the following explanation. Further, as will be described later, the invention may be applied to the case where the turbine rotor blade generates an unsteady force (BPF (Bucket Passing Frequency) exciting force) acting on the turbine stator blade of the next turbine stage (design of the distance between rotor and stator blades of a rotor blade trailing edge part and a stator blade leading edge part). Furthermore, the invention may be applied to 1. 5 stages of stator blade-rotor blade-stator blade and multiple stages.

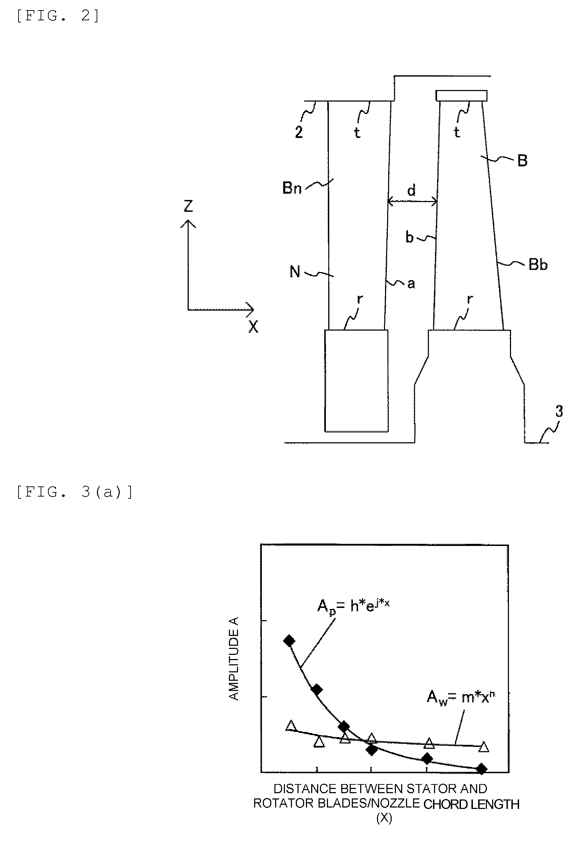

Fig. 2 shows an example of the turbine stage to which the invention is applied. Fig. 2 is a sectional view showing a schematic configuration. At the wake flow side of a stator blade N fixed to a casing inner wall (stator) 2, a rotor blade B implanted in a rotor 3 is provided. In a turbine, a plurality of turbine stages each including the stator blade N and the rotor blade B are provided. A distance between stator and rotor blades d is a distance between a trailing edge a of a blade part Bn of the stator blade N and a leading edge b of a blade part Bb of the rotor blade B in a rotor axial direction X. The distance between stator and rotor blades d is formed to take the same value from a blade tip section t to a blade root section r toward a blade height direction Z or formed to increase from the blade root section r to the blade tip section t toward the blade height direction Z in related art. As below, the explanation will be focused on a method of determining the distance between stator and rotor blades d in the turbine stage.

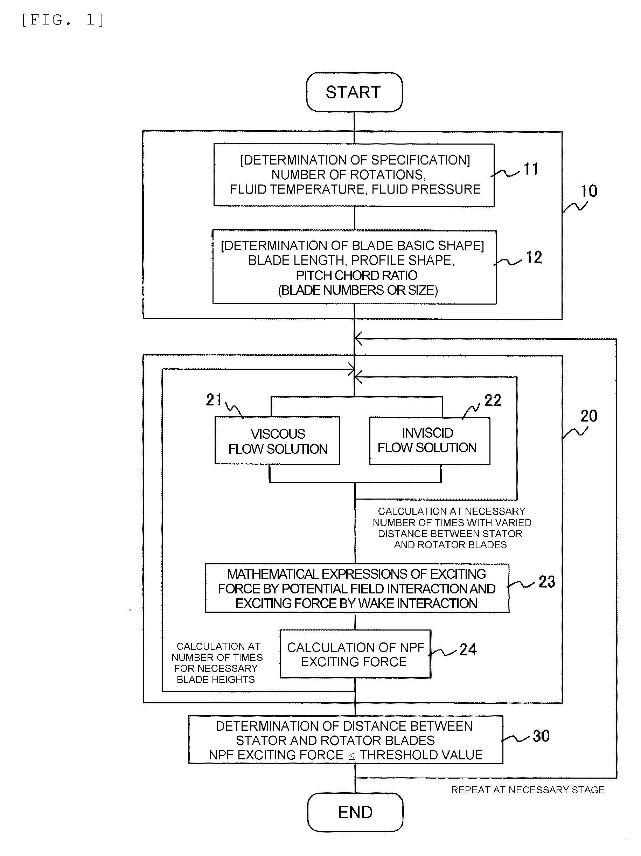

Fig. 1 is a flowchart for explanation of a design method of the turbine stage as one working example of the invention. The method includes a first step 10 of determining a blade shape, a second step 20 of calculating an NPF exciting force, and a third step 30 of determining the distance between stator and rotor blades.

The first step 10 includes determination of a specification 11 and determination of a blade basic shape 12. In the specification determination 11, the specification of the turbine to be designed, i.e. an environment condition is determined. Then, in the blade basic shape determination 12, the basic shape of the blade is determined so that a structure that achieves performance and endures bending due to steam and centrifugal tension may be obtained under a predetermined environment condition. The first step 10 is basically the same as that in related art and the detailed explanation will be omitted.

At the second step 20, the relationship between the distance between stator and rotor blades d and the NPF exciting force is obtained using the stator blade and the rotor blade determined at the first step 10, and the NPF exciting force at an arbitrary distance between stator and rotor blades d is calculated. The NPF exciting force differs in the blade height direction, and thus, the second step 20 is performed at times of the number of necessary blade heights, about one to ten cases.

The viscous flow solution 21 and the inviscid flow solution 22 are performed on the stator blade and the rotor blade modeled at the first step 10 at an arbitrary distance between stator and rotor blades by the unsteady calculation of CFD (Computational Fluid Dynamics). These viscous flow solution 21 and inviscid flow solution 22 are performed at several times with varied distances between stator and rotor blades so that the mathematical expressions of the exciting force by the potential field interaction and the exciting force by the wake interaction (mathematical expressions using a function of the distance between stator and rotor blades) may be enabled. The forces obtained by the respective analyses are Fourier-transformed, and thereby, the amplitudes and the phases of the exciting forces in the respective orders of excitation are obtained.

The force obtained from the viscous flow solution 21 is the NPF exciting force. Except the stages that operate under special conditions such as stages for partial admission and near an exhaust hood, the NPF exciting force $F_N(t)$ is the sum of the force of the potential field interaction and the force of the wake interaction and can be expressed by the formula (1).

$$F_N(t) = A_N \sin(\omega t + \alpha_N)$$

$$= A_p \sin(\omega t + \alpha_p) + A_w \sin(\omega t + \alpha_w) \qquad (1)$$

Here, A shows an amplitude, $\omega$ shows an angular velocity, t shows a time, $\alpha$ shows a phase, and, regarding indexes of the amplitude A and the phase $\alpha$, p shows a component by the potential field interaction, w shows a component by the wake interaction, and N shows a component of the NPF exciting force.

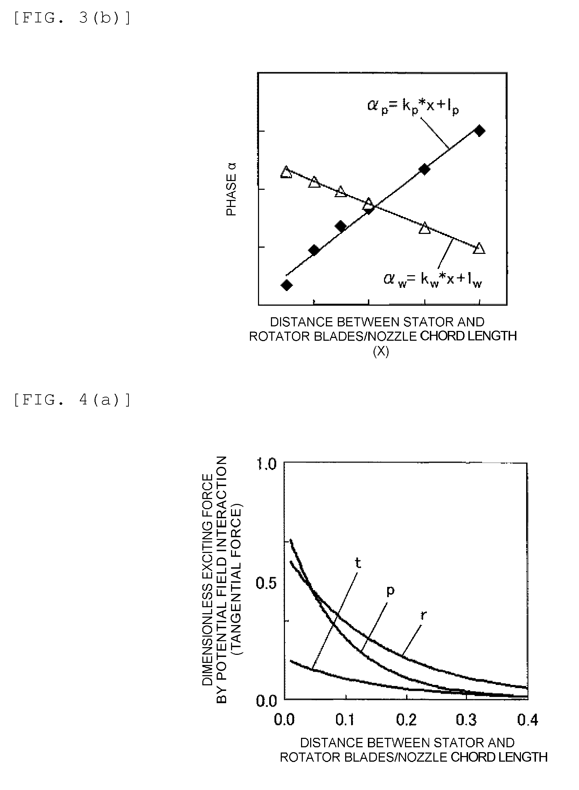

The force obtained from the inviscid flow solution 22 may be regarded as $F_p(t)$ (= $A_p \sin(\omega t + \alpha_p)$ ) by the potential field interaction, and the exciting force $F_w(t)$ (= $A_w \sin(\omega t + \alpha_w)$) by the wake interaction is obtained by subtraction of the force obtained by the inviscid flow solution (= $A_p \sin((\omega t + \alpha_p)$) from the force ($A_p \sin(\omega t + \alpha_p) + A_w \sin(\omega t + \alpha_w)$) obtained by the viscous flow solution. Thereby, the amplitudes and the phase of the exciting forces of the respective interactions at an arbitrary distance between stator and rotor blades are obtained. The calculations are performed at several times with varied distances between stator and rotor blades, and graphically represented as shown in Figs. 3 (a) and 3(b). Note that, in Figs. 3 (a) and 3(b), the lateral axes (x) are dimensionless by division of the distance between stator and rotor blades by the stator blade chord length. Regarding the amplitude of the exciting force, as seen from Fig. 3(a), the potential field interaction may be approximated by the exponential function and the wake interaction may be approximated by the power function. Further, as seen from Fig. 3(b), the phase may be approximated by the linear function regardless of the type of interaction. By the graphical representation, the amplitude $A_p$ and the phase $\alpha_p$ of the potential field interaction and the amplitude $A_w$ and the phase $\alpha_w$ of the wake interaction are mathematically expressed using a function with a factor of the distance between stator and rotor blades (numerical values of h, j, m, n, $k_p$, $l_p$, $k_w$, $l_w$ of the mathematical formulae in Figs. 3(a) and 3(b) are specified). The above described work enables mathematical expressions 23 of the exciting force by the potential field interaction and the exciting force by the wake interaction at an arbitrary blade height (mathematical expressions using the function of the distance between stator and rotor blades).

Then, calculation of the NPF exciting force at arbitrary distance between stator and rotor blades 24 is performed. The NPF exciting force is the sum of the exciting force by the potential field interaction and the exciting force by the wake interaction, and thus, the mathematical formula obtained by the mathematical expressions 23 or the exciting force by the potential field interaction and the exciting force $F_w(t)$ by the wake interaction at an arbitrary distance between stator and rotor blades (an arbitrary distance between stator and rotor blades including the distance between stator and rotor blades not analyzed by CFD) are obtained based on the graphs in Figs. 3(a) and 3(b), the obtained exciting force by the potential field interaction and exciting force $F_w(t)$ by the wake interaction are added, and thereby, the calculation of NPF exciting force at arbitrary distance between stator and rotor blades 24 is performed.

Further, $A_p$, $A_w$, $\alpha_p$, $\alpha_w$ at an arbitrary distance between stator and rotor blades are obtained from the graphs or the mathematical formulae in Figs. 3 (a) and 3(b), $A_N$ and $\alpha_N$ in the formula (1) are obtained from the following formula (2) and formula (3), and thereby, the NPF exciting force $F_N(t)$ at an arbitrary distance between stator and rotor blades may be calculated based on the formula (1).

$$A_N = \sqrt{\{(A_p \cos\alpha_p + A_w \cos\alpha_w)^2 + (A_p \sin\alpha_p + A_w \sin\alpha_w)^2\}} \qquad (2)$$

$$\alpha_N = \tan^{-1}\{(A_p \sin\alpha_p + A_w \sin\alpha_w)/(A_p \cos\alpha_p + A_w \cos\alpha_w)\} \qquad (3)$$

The above described second step 20 is performed with varied blade heights. In the working example, the relationships between the distance between stator and rotor blades d and the NPF exciting force in the blade root section r, the blade mid-section p, and the blade tip section t are obtained.

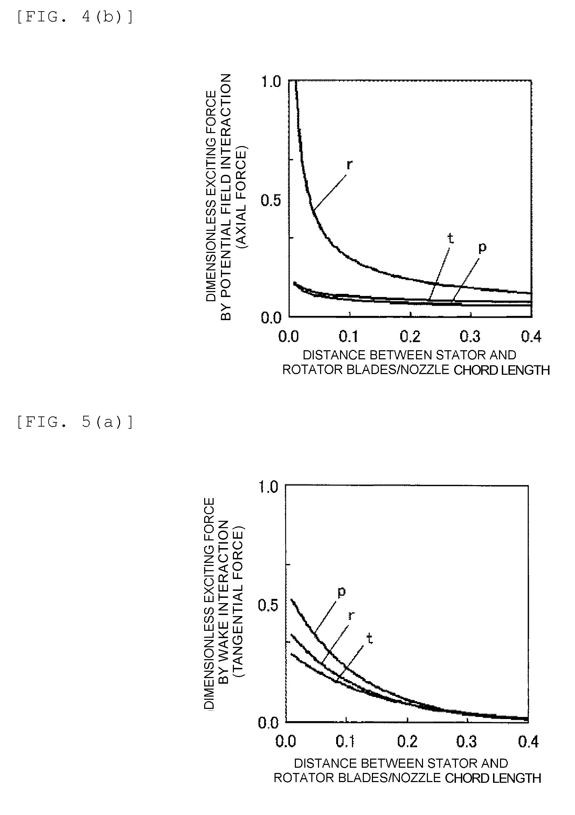

Figs. 4 (a) and 4(b) show examples of relationships between the exciting force by the potential field interaction obtained based on the above described mathematical expressions 23 and the distance between stator and rotor blades d with respect to the blade root section r, the blade mid-section p, and the blade tip section t. The lateral axes are dimensionless by division of the distance between stator and rotor blades by the stator blade cord length. Further, the forces are separately shown into tangential forces (Fig. 4(a)) and axial forces (Fig. 4 (b)) (the pressure (exciting force) on the blade surface obtained by the analysis may be resolved into a tangential force (= FT) as a force in a blade surface normal direction and an axial force (= FA), and these are integrated and obtained as the tangential force and the axial force as resultant forces acting on the blade). As seen from Figs. 4 (a) and 4 (b), the exciting force by the potential field interaction is characterized by becoming larger in an exponential function as the distance between stator and rotor blades d becomes smaller.

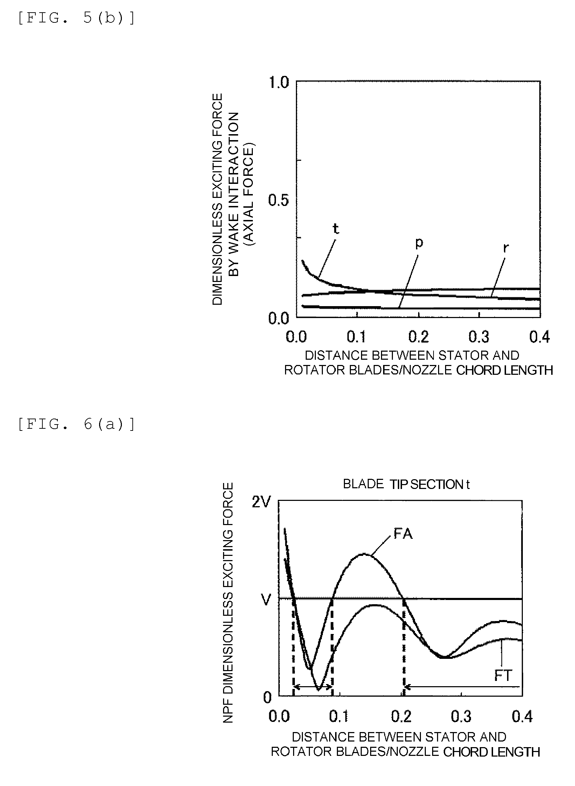

Figs. 5 (a) and 5(b) show examples of relationships between the exciting force by the wake interaction obtained based on the above described mathematical expressions 23 and the distance between stator and rotor blades d with respect to the blade root section r, the blade mid-section p, and the blade tip section t. The exciting force by the wake interaction is characterized by becoming larger according to power law as the distance between stator and rotor blades d becomes smaller.

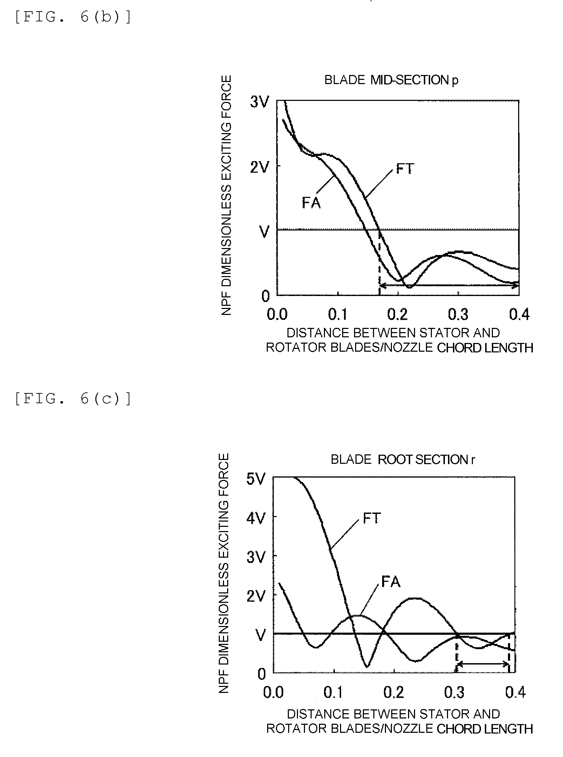

Next, determination of distance between stator and rotor blades 30 will be explained with reference to Figs. 6(a), 6(b) and 6(c). Figs. 6(a), 6(b) and 6(c) respectively show examples of relationships between the NPF exciting force respectively obtained based on the above described calculation of the NPF exciting force 24 and the distance between stator and rotor blades d. Fig. 6(a) shows the relationships between the NPF exciting force and the distance between stator and rotor blades d in a blade section of the blade tip section t, Fig. 6 (b) shows the relationships between the NPF exciting force and the distance between stator and rotor blades d in a blade section of the blade mid-section p, Fig. 6 (c) shows the relationships between the NPF exciting force and the distance between stator and rotor blades d in a blade section of the blade root section r, respectively. The lateral axes are dimensionless by division of the distance between stator and rotor blades by the stator blade chord length. The longitudinal axes are dimensionless using a threshold value V. The threshold value V corresponds to a rotor blade breaking limit value (acceptable value). Further, the forces are separately shown into tangential forces FT and axial forces FA. The NPF exciting force numerically complexly changes with respect to the distance between stator and rotor blades d, and has different magnitude and tendencies in the blade height direction.

To suppress the NPF exciting force equal to or less than the threshold value V in both the tangential forces FT and the axial forces FA, it is necessary to set the distance between stator and rotor blades d in a range shown by arrows. When the distances between stator and rotor blades d are made equal in the blade height direction, it is necessary to set the distances in a range from 0.3 to 0.4 in this case. To upgrade performance or the like, shortening of the distance between stator and rotor blades is effective. Accordingly, by changing the distance between stator and rotor blades d in the blade height direction, setting the distance between stator and rotor blades d as small as possible is effective, respectively. In this case, the distance between stator and rotor blades d is determined to be shortest in the blade tip section t and longest in the blade root section r. Thereby, the shortest distance between stator and rotor blades with which the NPF exciting force is equal to or less than a predetermined threshold value may be determined.

The NPF exciting force may be calculated by unsteady calculation of CFD in related art, however, determination of the optimal distance between stator and rotor blades is not easy. That is, unlike the exciting force by the potential field interaction and the exciting force by the wake interaction, the NPF exciting force complexly changes as shown in Figs. 6 (a), 6(b) and 6(c) and its regularity is unknown. The calculation is performed at many times with varied distances between stator and rotor blades and the NPF exciting forces are plotted, and thereby, the tendency of changes of the NPF exciting force with respect to the distance between stator and rotor blades is known. However, in the method, calculation takes time and it is difficult to quantitatively predict the NPF exciting force at an arbitrary distance between stator and rotor blades. In the working example, the exciting force by the potential field interaction and the exciting force by the wake interaction may be mathematically expressed using the function of the distance between stator and rotor blades, and the NPF exciting force at the arbitrary distance between stator and rotor blades may be calculated based thereon. In other words, generalization of the NPF exciting force, which has been impossible in related art, may be realized. Therefore, in the working example, compared to the method of directly calculating the NPF exciting forces in the respective conditions, the calculation time may be significantly shortened and the NPF exciting force at an arbitrary distance between stator and rotor blades may be quantitatively predicted. As a result, the optimal distance between stator and rotor blades may be determined easily. Note that the determination of the distance between stator and rotor blades is performed with graphic representation of the relationships between the NPF exciting force and the distance between stator and rotor blades as shown in Figs. 6(a), 6(b) and 6(c) in the above described explanation, however, the NPF exciting force at an arbitrary distance between stator and rotor blades may be obtained and the determination may be performed while checking whether or not the force is equal to or less than the predetermined threshold value.

The above described second step 20 and third step 30 are performed with respect to the respective stages necessary to determine the distance between stator and rotor blades.

Other working examples of the invention will be explained.

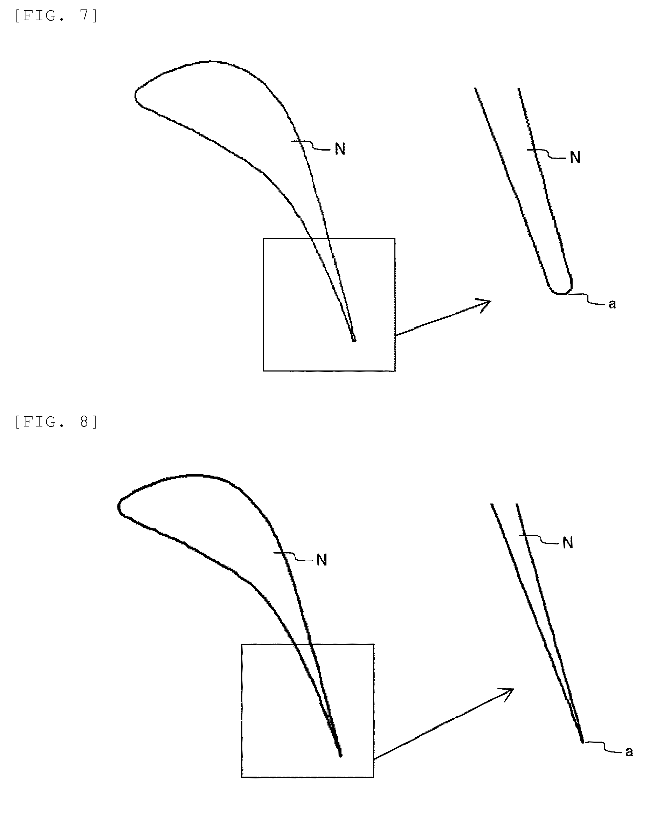

Fig. 7 shows a blade section as an example of a turbine stator blade to which the invention is applied. Typically, the trailing edge part a of the stator blade N has a circular arc shape. For design of the turbine stage that is unable to disregard the effect of the wake interaction, when the trailing edge part of the stator blade is circular, wake is generated in the inviscid flow solution 22 in Fig. 1, and the exciting force by the potential field interaction may not be obtained by CFD. Accordingly, in the working example, to obtain the exciting force by the potential field interaction by CFD (inviscid flow solution 22), the turbine stator blade used for CFD unsteady calculation is shaped.

Fig. 8 shows a blade section of the turbine stator blade used for CFD unsteady calculation in the working example. In the working example, the trailing edge part a is formed in a sharply pointed shape by extending the blade pressure side surface and the blade suction side surface without changing the trailing edge shape (thickness or the like) of the stator blade shown in Fig. 7. When the trailing edge part a of the stator blade N is sharply pointed, even in the case for the design of the turbine stage that is unable to disregard the effect of the wake interaction, the generation of wake is suppressed in the inviscid flow solution 22 in Fig. 1, and thus, the exciting force by the potential field interaction may be obtained by CFD. Note that, in this case, calculation is performed with the same blade model in the viscous flow solution 21 in Fig. 1 and the result of the inviscid flow solution 22 is subtracted from the result of the viscous flow solution 21, and thereby, the exciting force by the wake interaction is obtained.

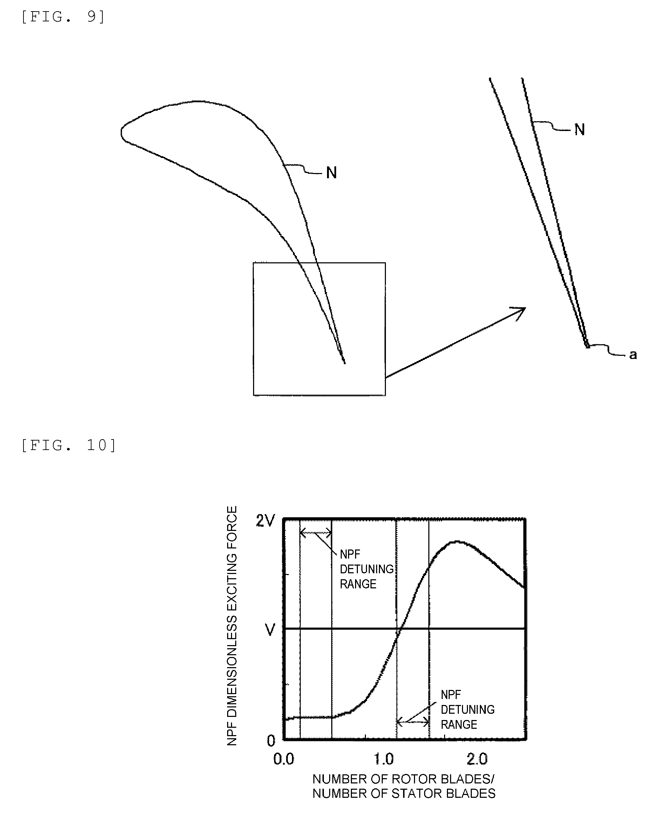

Fig. 9 shows a blade section of another example of the turbine stator blade used for CFD unsteady calculation. In the working example, the trailing edge thickness is made smaller than that in Fig. 7 without changing the nozzle chord length of the stator blade N. Even in the case for the design of the turbine stage that is unable to disregard the effect of the wake interaction, the trailing edge thickness of the stator blade N is made smaller and wake is not generated in the inviscid flow solution 22 in Fig. 1 like the working example in Fig. 8, and thereby, the exciting force by the potential field interaction may be obtained by CFD. If the thickness of the trailing edge part of the stator blade to be calculated is made smaller to 25% or less than the original stator blade, generation of wake may be suppressed. To make the thickness of the trailing edge part smaller, for example, at the pressure side of the stator blade, shaping of making the blade thickness from the mid-section to the trailing edge part smaller so that the flow of the part may be the same as that of the original nozzle is performed.

The other working examples of the invention will be explained. In the above described working examples, the NPF exciting force is mathematically expressed using the function with a factor of the distance between stator and rotor blades, however, the force may be mathematically expressed using a function with another factor.

Fig. 10 shows an example of a relationship between the NPF exciting force and a ratio of numbers of rotor blades and stator blades. As the lateral axis is larger, the stator blade becomes relatively large with respect to the rotor blade, or the number of blades becomes smaller. In this regard, the wake generated from the nozzle trailing edge is larger and the NPF exciting force tends to be larger. However, the NPF exciting force is generated by the interaction of the potential field interaction and the wake interaction, and it is known that the relationship between the ratio of numbers of rotor blades and stator blades and the NPF exciting force is not monotonous as shown in Fig. 10. In the working example, with the ratio of numbers of rotor blades and stator blades as a factor, the exciting force by the potential field interaction and the exciting force by the wake interaction are individually obtained and summed in the same procedure as that of the working example shown in Fig. 1, and thereby, the NPF exciting force at an arbitrary ratio of numbers of rotor blades and stator blades may be predicted. In consideration of the NPF detuning range of the respective modes (tangential direction, axial direction, torsional direction) to be detuned, the ratio of numbers of rotor blades and stator blades with which the NPF exciting force is equal to or less than the threshold value V may be selected. Note that, unlike the case where the distance between stator and rotor blades is used as a factor, the same value of the ratio of numbers of rotor blades and stator blades with which the NPF exciting force is equal to or less than the threshold value V is selected in the blade root section r, the blade mid-section p, and the blade tip section t.

In the above described working example, in place of the ratio of numbers of rotor blades and stator blades, with the ratio of chord lengths of rotor blades and stator blades as a factor, the NPF exciting force at an arbitrary ratio of chord lengths of rotor blades and stator blades may be predicted. In consideration of the NPF detuning range of the respective modes to be detuned, the ratio of chord lengths of rotor blades and stator blades with which the NPF exciting force is equal to or less than the threshold value V is selected.

Further, in the above described working example, the method of mathematically expressing the NPF exciting force with the distance between stator and rotor blades, the ratio of blade numbers or the ratio of chord lengths of rotor blades and stator blades as a factor has been shown, however, the NPF exciting force may be mathematically expressed with another factor. The mathematical expressions may be made with another factor as long as the NPF exciting force may be reduced and the blade design may be quickly and effectively performed.

Furthermore, in the above described working example, the design method for the unsteady force acting on the rotor blade and the NPF exciting force has been explained, however, the unsteady force acting on the stator blade at the downstream turbine stage and BPF (Bucket Passing Frequency) exciting force may be predicted according to the same method, and the method may be applied to the design of the axial distance between the rotor blade trailing edge part of the upstream turbine stage and the stator blade leading edge part of the downstream turbine stage and the distance between rotor and stator blades.

In addition, as the analysis model to which the invention is applied, a pair of a stator blade and a rotor blade (one stage) is considered, however, 1.5 stages of stator blade-rotor blade-stator blade and multiple stages may be similarly studied.

The distance between stator and rotor blades and the distance between rotor and stator blades in the turbine stage are designed based on the above described invention, and thereby, the NPF exciting force acting on the rotor blade and the BPF exciting force acting on the stator blade may be quickly and effectively set to a predetermined threshold value or less without unnecessary degradation in blade performance and increase in rotor shaft length. Further, the turbine is manufactured based on the turbine stage designed by the design method of the invention, and thereby, the turbine without excessive NPF exciting force or BPF exciting force but with upgraded blade performance and shortened rotor shaft length may be realized.

Note that the invention is not limited to the above described working examples, but includes various modified examples. For example, the above described working examples are explained in detail for explanation in an easy-to-understand manner, and not necessarily limited to those having all configurations explained. Further, part of the configuration of one working example may be replaced by the configuration of the other working example and the configuration of the other working example may be added to the configuration of one working example. Furthermore, with respect to part of the configurations of the respective working examples, addition, removal, replacement of other configurations may be performed.

Reference Signs List

X. . . axial direction, Z... radial direction, 2... casing inner wall (stator), 3... rotor, N... stator blade, Bn... stator blade vane part, a... stator blade trailing edge, B... rotor blade, Bb... rotor blade vane part, b... rotor blade leading edge, d... distance between stator and rotor blades, p... blade mid-section, r... blade root section, t... blade tip section, $A_p$ . . . amplitude of exciting force by potential field interaction, $A_w$ . . . amplitude of exciting force by wake interaction, $\alpha_p$ . . . phase of exciting force by potential field interaction, $a_w$ . . . phase of exciting force by wake interaction, FT... tangential force, FA... axial force, V . . . threshold value.

**Claims**

1. A method of calculating an unsteady force acting on a rotor blade or a stator blade in a turbine stage including the stator blade and the rotor blade, **characterized by** comprising:

   obtaining unsteady forces acting on the rotor blade or the stator blade with respect to a plurality of values by varying a value of a factor by the viscous flow solution using models of the stator blade and the rotor blade for which blade basic shapes have been determined;
   obtaining exciting forces by potential field interaction acting on the rotor blade or the stator blade with respect to the plurality of values by the inviscid flow solution using the models;
   obtaining exciting forces by wake interaction acting on the rotor blade or the stator blade with respect to the plurality of values from a difference between a result of the viscous flow solution and a result of the inviscid flow solution;
   mathematically expressing the exciting forces by the potential field interaction and the exciting forces by the wake interaction based on the obtained exciting forces by the potential field interaction and exciting forces by the wake interaction with respect to the plurality of values; and
   predicting the unsteady force acting on the rotor blade or the stator blade when the factor is an arbitrary value based on the mathematically-expressed exciting forces by the potential field interaction and exciting forces by the wake interaction.

2. A method of designing a turbine of using the method of calculating the unsteady force acting on the rotor blade or the stator blade according to claim 1 and determining a distance between stator and rotor blades as an axial distance between a trailing edge part of the stator blade and a leading single part of the rotor blade in a turbine stage including the rotor blade and the stator blade, **characterized by** comprising:

   obtaining unsteady forces acting on the rotor blade with respect to a plurality of the distances between stator and rotor blades by the viscous flow solution using models of the rotor blade and the stator blade for which blade basic shapes have been determined;
   obtaining exciting forces by potential field interaction acting on the rotor blade with respect to the plurality of distances between stator and rotor blades by the inviscid flow solution using the models;
   obtaining exciting forces by wake interaction acting on the rotor blade with respect to the plurality of distances between stator and rotor blades from a difference between a result of the viscous flow solution and a result of the inviscid flow solution;

mathematically expressing the exciting forces by the potential field interaction and the exciting forces by the wake interaction as a function of the distance between stator and rotor blades based on the obtained exciting forces by the potential interaction and exciting forces by the wake interaction with respect to the plurality of distances between stator and rotor blades;

predicting the unsteady force acting on the rotor blade when the distance between stator and rotor blades is an arbitrary value based on the mathematically-expressed exciting forces by the potential field interaction and exciting forces by the wake interaction; and

determining the distance between stator and rotor blades so that the unsteady force acting on the rotor blade may be smaller than a predetermined threshold value based on the predicted unsteady force acting on the rotor blade.

3. The method of designing the turbine according to claim 2, wherein the viscous flow solution and the inviscid flow solution are performed using a stator blade having a sharply-pointed trailing edge as the stator blade in the model.

4. The method of designing the turbine according to claim 2, wherein the viscous flow solution and the inviscid flow solution are performed using a stator blade having a trailing edge exit thickness with a thinned trailing edge part to be 25% or less compared to the stator blade having the determined blade basic shape as the stator blade in the model.

5. A method of designing a turbine of using the method of calculating the unsteady force acting on the rotor blade or the stator blade according to claim 1 and determining a ratio of blade numbers or chord lengths of the rotor blades and the stator blades in a turbine stage including the stator blade and the rotor blade, **characterized by** comprising:

obtaining unsteady forces acting on the rotor blade with respect to a plurality of the ratios of blade numbers or the ratios of chord lengths by the viscous flow solution using models of the rotor blade and the stator blade for which blade basic shapes have been determined;

obtaining exciting forces by potential field interaction acting on the rotor blade with respect to the plurality of ratios of blade numbers or ratios of chord lengths by the inviscid flow solution using the models;

obtaining exciting forces by wake interaction acting on the rotor blade with respect to the plurality of ratios of blade numbers or ratios of chord lengths from a difference between a result of the viscous flow solution and a result of the inviscid flow solution;

mathematically expressing the exciting forces by the potential field interaction and the exciting forces by the wake interaction as a function of the ratio of blade numbers or the ratio of chord lengths based on the obtained exciting forces by the potential field interaction and exciting forces by the wake interaction with respect to the plurality of ratios of blade numbers or ratios of chord lengths;

predicting the unsteady force acting on the rotor blade when the ratio of blade numbers or the ratio of chord lengths is an arbitrary value based on the mathematically-expressed exciting forces by the potential field interaction and exciting forces by the wake interaction; and

determining the ratio of blade numbers or the ratio of chord lengths so that the unsteady force acting on the rotor blade may be smaller than a predetermined threshold value based on the predicted unsteady force acting on the rotor blade.

6. A method of designing a turbine having a plurality of turbine stages each including a stator blade and a rotor blade of using the method of calculating the unsteady force acting on the rotor blade or the stator blade according to claim 1 and determining a distance between rotor and stator blades as an axial distance between a trailing single part of the rotor blade of an upstream turbine stage and a leading edge part of the stator blade of a downstream turbine stage, **characterized by** comprising:

obtaining unsteady forces acting on the stator blade with respect to a plurality of the distances between rotor and stator blades by the viscous flow solution using models of the rotor blade and the stator blade for which blade basic shapes have been determined;

obtaining exciting forces by potential field interaction acting on the stator blade with respect to the plurality of distances between rotor and stator blades by the inviscid flow solution using the models;

obtaining exciting forces by wake interaction acting on the stator blade with respect to the plurality of distances between rotor and stator blades from a difference between a result of the viscous flow solution and a result of the inviscid flow solution;

mathematically expressing the exciting forces by the potential field interaction and the exciting forces by the wake interaction as a function of the distance between rotor and stator blades based on the obtained exciting forces by the potential field interaction and exciting forces by the wake interaction with respect to the plurality of distances between rotor and stator blades;

predicting the unsteady force acting on the stator blade when the distance between rotor and stator blades is an arbitrary value based on the mathematically-expressed exciting forces by the potential field interaction and exciting forces by the wake interaction; and

determining the distance between rotor and stator blades so that the unsteady force acting on the stator blade may be smaller than a predetermined threshold value based on the predicted unsteady force acting on the stator blade.

7. A method of designing a turbine having a plurality of turbine stages each including a stator blade and a rotor blade of using the method of calculating the unsteady force acting on the rotor blade or the stator blade according to claim 1 and determining a ratio of blade numbers or a ratio of chord lengths of the rotor blades of an upstream turbine stage and the stator blades of a downstream turbine stage, **characterized by** comprising:

obtaining unsteady forces acting on the stator blade with respect to a plurality of the ratios of blade numbers or the ratios of chord lengths by the viscous flow solution using models of the rotor blade and the stator blade for which blade basic shapes have been determined;

obtaining exciting forces by potential field interaction acting on the stator blade with respect to the plurality of ratios of blade numbers or ratios of chord lengths by the inviscid flow solution using the models;

obtaining exciting forces by wake interaction acting on the stator blade with respect to the plurality of ratios of blade numbers or ratios of chord lengths from a difference between a result of the viscous flow solution and a result of the inviscid flow solution;

mathematically expressing the exciting forces by the potential field interaction and the exciting forces by the wake interaction as a function of the ratio of blade numbers or the ratio of chord lengths based on the obtained exciting forces by the potential field interaction and exciting forces by the wake interaction with respect to the plurality of ratios of blade numbers or ratios of chord lengths;

predicting the unsteady force acting on the stator blade when the ratio of blade numbers or the ratio of chord lengths is an arbitrary value based on the mathematically-expressed exciting forces by the potential field interaction and exciting forces by the wake interaction; and

determining the ratio of blade numbers or the ratio of chord lengths so that the unsteady force acting on the stator blade may be smaller than a predetermined threshold value based on the predicted unsteady force acting on the stator blade.

8. A method of manufacturing a turbine **characterized by** manufacturing using the design method according to any one of claims 2 to 7.

[FIG. 1]

START

[DETERMINATION OF SPECIFICATION]
NUMBER OF ROTATIONS,
FLUID TEMPERATURE, FLUID PRESSURE — 11

[DETERMINATION OF BLADE BASIC SHAPE]
BLADE LENGTH, PROFILE SHAPE,
PITCH CHORD RATIO
(BLADE NUMBERS OR SIZE) — 12

10

21
VISCOUS
FLOW SOLUTION

22
INVISCID
FLOW SOLUTION

20

CALCULATION AT NECESSARY
NUMBER OF TIMES WITH VARIED
DISTANCE BETWEEN STATOR
AND ROTATOR BLADES

MATHEMATICAL EXPRESSIONS OF EXCITING
FORCE BY POTENTIAL FIELD INTERACTION AND
EXCITING FORCE BY WAKE INTERACTION — 23

CALCULATION AT
NUMBER OF TIMES
FOR NECESSARY
BLADE HEIGHTS

CALCULATION OF NPF
EXCITING FORCE — 24

DETERMINATION OF DISTANCE BETWEEN
STATOR AND ROTATOR BLADES
NPF EXCITING FORCE ≤ THRESHOLD VALUE — 30

REPEAT AT NECESSARY STAGE

END

[FIG. 2]

[FIG. 3(a)]

$A_p = h*e^{j*x}$

$A_w = m*x^n$

AMPLITUDE A

DISTANCE BETWEEN STATOR AND
ROTATOR BLADES/NOZZLE CHORD LENGTH
(X)

[FIG. 3(b)]

$$\alpha_p = k_p * x + l_p$$

$$\alpha_w = k_w * x + l_w$$

PHASE α

DISTANCE BETWEEN STATOR AND
ROTATOR BLADES/NOZZLE CHORD LENGTH
(X)

[FIG. 4(a)]

DIMENSIONLESS EXCITING FORCE
BY POTENTIAL FIELD INTERACTION
(TANGENTIAL FORCE)

t

p

r

DISTANCE BETWEEN STATOR AND
ROTATOR BLADES/NOZZLE CHORD LENGTH

[FIG. 4(b)]

DIMENSIONLESS EXCITING FORCE BY POTENTIAL FIELD INTERACTION (AXIAL FORCE)

DISTANCE BETWEEN STATOR AND ROTATOR BLADES/NOZZLE CHORD LENGTH

[FIG. 5(a)]

DIMENSIONLESS EXCITING FORCE BY WAKE INTERACTION (TANGENTIAL FORCE)

DISTANCE BETWEEN STATOR AND ROTATOR BLADES/NOZZLE CHORD LENGTH

[FIG. 5(b)]

[FIG. 6(a)]

[FIG. 6(b)]

BLADE MID-SECTION p

[FIG. 6(c)]

BLADE ROOT SECTION r

[FIG. 7]

[FIG. 8]

[FIG. 9]

[FIG. 10]

## INTERNATIONAL SEARCH REPORT

International application No.

PCT/JP2012/063111

### A. CLASSIFICATION OF SUBJECT MATTER
*F01D5/14*(2006.01)i, *F01D9/02*(2006.01)i, *G06F17/50*(2006.01)i

According to International Patent Classification (IPC) or to both national classification and IPC

### B. FIELDS SEARCHED

Minimum documentation searched (classification system followed by classification symbols)
F01D1/00-15/12, 23/00-25/36, F02C1/00-9/58, G06F17/50

Documentation searched other than minimum documentation to the extent that such documents are included in the fields searched
|  |  |  |  |
|---|---|---|---|
| Jitsuyo Shinan Koho | 1922–1996 | Jitsuyo Shinan Toroku Koho | 1996–2012 |
| Kokai Jitsuyo Shinan Koho | 1971–2012 | Toroku Jitsuyo Shinan Koho | 1994–2012 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 8-61001 A (Hitachi, Ltd.), 05 March 1996 (05.03.1996), paragraphs [0004] to [0010]; fig. 1 to 13 (Family: none) | 1-8 |
| A | JP 2006-46226 A (Mitsubishi Heavy Industries, Ltd.), 16 February 2006 (16.02.2006), paragraphs [0001] to [0007], [0022] to [0041]; fig. 1 to 17 (Family: none) | 1-8 |

☒ Further documents are listed in the continuation of Box C.     ☐ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 08 August, 2012 (08.08.12) | 28 August, 2012 (28.08.12) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

| International application No. |
|---|
| PCT/JP2012/063111 |

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2006-138250 A  (Mitsubishi Heavy Industries, Ltd.),<br>01 June 2006 (01.06.2006),<br>paragraphs [0002] to [0003], [0018] to [0026]; fig. 9<br>(Family: none) | 1-8 |
| A | JP 10-149384 A  (Toshiba Corp.),<br>02 June 1998 (02.06.1998),<br>page 2, right column, line 17 to page 4, right column, line 48; fig. 1 to 6<br>(Family: none) | 1-8 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 3886584 B

### Non-patent literature cited in the description

- **M. V. HOYNINGEN-HUENE ; J. HERMELER.** Time-Resolved Numerical Analysis of the 2-D Aerodynamics in the First Stage of an Industrial Gas Turbine for Different Vane-Blade Spacings. *ASME, 99-GT-102,* 1999, 1-12

- **T. KORAKIANITIS.** *On the Prediction of Unsteady Forces on Gas Turbine Blades: Part 1&2 Description of the Approach: Transactions of the ASME,* 1992, vol. 114, 114-131